Europäisches Patentamt

European Patent Office

Office européen des brevets

(11) Publication number: **0 195 092**
**B1**

(12) **EUROPEAN PATENT SPECIFICATION**

(45) Date of publication of patent specification: **13.06.90**

(21) Application number: **85102715.1**

(22) Date of filing: **09.03.85**

(51) Int. Cl.⁵: **H 04 M 1/02, H 04 M 11/02**

(54) **Picture transmitting intercom apparatus for wall mounted installations, having improved fastening means and a circuitry laid on compact size moulded supports.**

(43) Date of publication of application:
**24.09.86 Bulletin 86/39**

(45) Publication of the grant of the patent:
**13.06.90 Bulletin 90/24**

(84) Designated Contracting States:
**DE FR GB**

(56) References cited:
**DE-A-3 113 996**

**FUNKSCHAU, vol. 52, no. 8, April 1980, pages 63-66, München, DE; H. SELMAYR: "Türfernsehanlagen"**

(73) Proprietor: **URMET S.p.A. Costruzioni Elettro-Telefoniche**
**Via Bologna 188/C**
**I-10154 Torino (IT)**

(72) Inventor: **Mondardini, Massimo**
**Via Mazzini 40**
**I-10123 Torino (IT)**

(74) Representative: **Modiano, Guido et al**
**MODIANO, JOSIF, PISANTY & STAUB Modiano & Associati Via Meravigli, 16**
**I-20123 Milano (IT)**

## Description

This invention relates to a picture-transmitting intercom apparatus, and more precisely to an apparatus intended for wall mounted installations, of the type comprising a container with a visual monitor, a handset and related hooking contacts, and at least one door opener pushbutton.

Current intercom apparatus of the type indicated are provided with a support intended for attachment to a wall, which simultaneously serves as a bottom for the container, and a support for the circuitry and monitor kinescope.

This known arrangement of parts has many disadvantages, and primarily considerable laboriousity of installation, difficulty of intervention for replacement and/or maintenance purposes, and larger overall dimensions of the apparatus.

This invention is directed to remove these drawbacks, and is essentially aimed at providing an apparatus equipped with improved fastening means adapted to significantly facilitate the installation operations for which, in particular, dismantling of the apparatus is no longer required, nor is the prior installation of bushings or walled boxes of special design. Another object of the invention is to significantly simplify the composition and arrangement of the supports for the circuit components that simplification being directed to facilitate the interventions of replacement and/or maintenance of the apparatus and reduce the space requirements with self-evident aesthetic advantages as well as improved functionality and convenience of use.

To achieve these objects, as well as others which will be apparent from the detailed description that follows, this invention has for its subject a picture-transmitting intercom apparatus characterized by the following combination and arrangement of parts:

a container box incorporating the visual monitor and a support for the circuitry, said box being completed by a cover forming a removable bottom intended to cooperate, for supporting the apparatus, with a plate previously secured to the wall;

a plate support, advantageously made of metal, which may be permanently secured to the wall and carries a multipole connector adapted to cooperate, in mutal connection relationship, with a similar complementary connector carried on the circuitry support and passed through a window in the removable bottom;

removable fastening means for quick connection between said box bottom and support plate: the distribution of the system wiring being accomplished by means of an embedded box of a known (standard) type as employed for embedding switches and the like in common domestic electrical supply systems.

According to the invention, moreover, the support for the circuitry of the apparatus is composed of a single printed circuit board configured as a right dihedral, which is arranged with one face parallel to one side of the box and the other parallel to the bottom. On the parallel face to the side, there is formed a connector intended for cooperation, in mutual connection relationship, with the mating connector of the support plate. Formed through the bottom face is a window for allowing the base of the kinescope therethrough, which is supported on the front face of the box. That base is protected by a deep-drawn housing provided on the box removable bottom and protruding inwards of the embedded box.

Further features and advantages will become apparent from the following detailed description, with reference to the accompanying drawings, where:

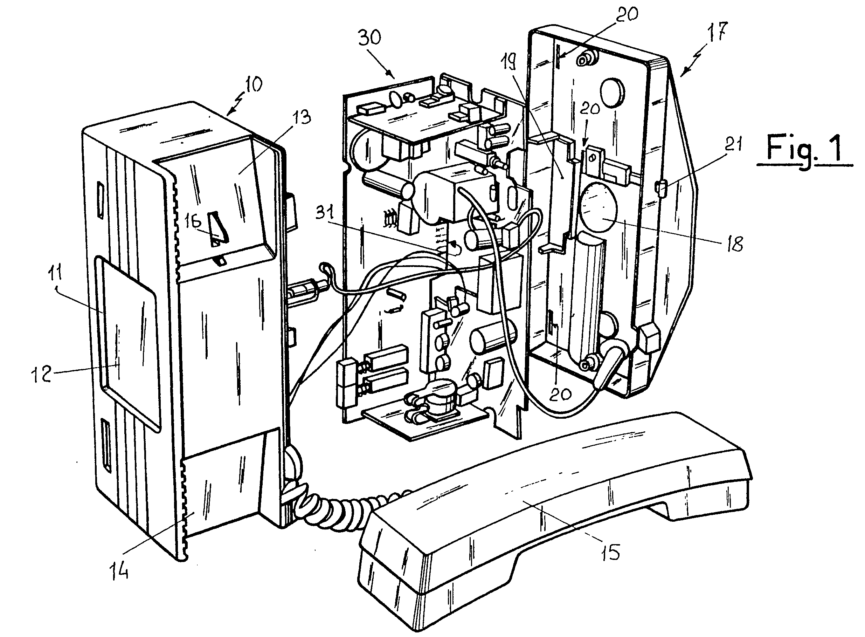

Figure 1 is an exploded perspective view of the front side of the intercom apparatus according to this invention;

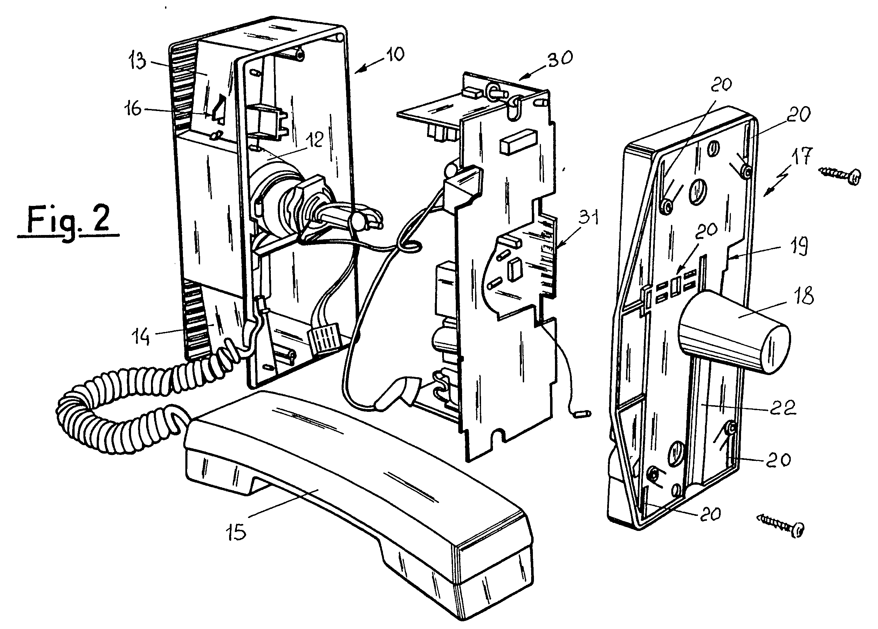

Figure 2 is a similar exploded perspective view of the rear side of the apparatus;

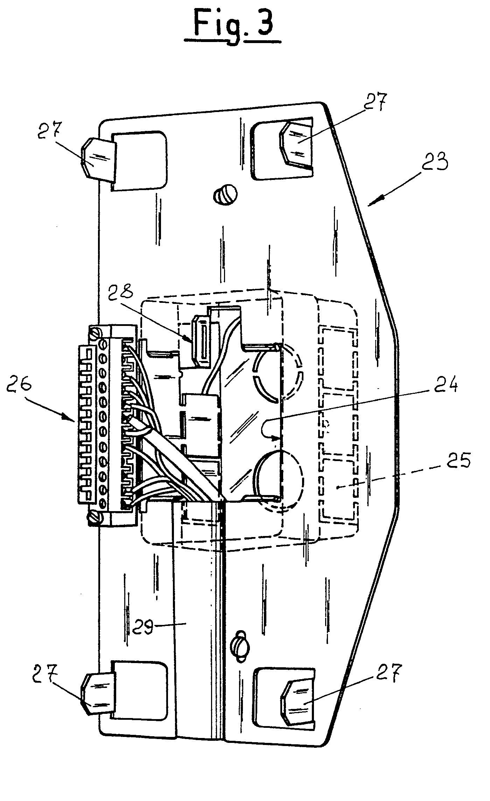

Figure 3 is a perspective view showing in detail the support plate attachable to the wall, and its related embedded box for distributing the wiring of the intercom apparatus.

In the drawings, 10 designates the parallel-elepipedal container box on the front face whereof there is formed a center window 11 for the kinescope 12 of the visual monitor; the box is provided laterally with seats 13—14 for holding the handset 15, with which a finger 16 actuating the hook contacts cooperates, in a manner known *per se*.

The box, which carries the kinescope 12 fixedly secured thereto, is closed rearwardly by a cover forming a removable bottom 17 which is held fast by means of screws engaging with corresponding threaded seats in the box, thereby the bottom cannot be separated from the box by acting on the front side of the latter.

Formed in the removable bottom 17 is a deep-drawn seat 18 for containing the base of the kinescope; a side window 19, a series of five locating slots 20, of which four are located at the vertices of the bottom and one centrally, a center retaining latch rod 21, and a rear groove 22, the functions whereof will be discussed hereinafter.

The removable bottom 17 is intended to cooperate — for holding the apparatus — with a support plate 23 wherewith the whole apparatus, including the box 10 and bottom 17, is removably mounted.

The support plate 23 is intended for permanent connection to the wall, advantageously by means of expansion plugs, and has a center opening 24 wherethrough the space is accessible for an embedded box 25 of a known type employed in electric supply systems for domestic networks. Led to the embedded box 25 are the cables of the intercom system the terminals whereof are soldered to a (female) connector 26 carried on the support plate 23 and located beside the opening 24.

Also formed on the plate 24 are four retaining and centering fins 27 intended for cooperation with the corresponding locating slots 20 in the bottom 17; a center lug 28 formed with a throughgoing slot adapted to receive the latch rod 21, and a locating rib 29 mating with the groove 22 in the bottom 17.

As clearly shown in the figure, the components of the apparatus's circuitry is carried on a printed circuit board 30 configured as a right dihedral, which accommodates on its interior the box 10 with one face parallel to one side of the box itself and the other parallel to the bottom 17. Formed on the side face of said dihedral plate is a (male) connector 31 which, being passed through the side window 19 in the bottom 17, is brought into mutual connection engagement with the connector 26 of the support plate 23 on securing the apparatus to the latter. An opening is formed in the bottom face of the printed circuit wherethrough the base of the kinescope 12 is passed to fit in the deep-drawn seat 18 of the bottom 17.

The apparatus is preliminary fully assembled, and the installation provides for connection of the support plate 23 to the wall and connection of the system leads to the connector 26 of said plate. Then, the pre-assembled apparatus is connected to the plate by interconnecting the connectors 31—26, fitting the fins 27 and lug 28 into the seats 20 of the bottom, and the latch rod 21 into the slot of the center lug 28.

**Claims**

1. a wall-mounted transmitting intercom apparatus, comprising a container box (10) incorporating the visual monitor and a support (30) for the circuitry, said box (10) being completed by a cover forming a removable bottom (17) intended for cooperation, in supporting the apparatus, with a support plate (23) previously attached to the wall; said support plate (23), advantageously of metal, being fixedly attached to the wall and carrying a multipole connector (26) adapted to cooperate, in mutual connection relationship, with a similar complementary connector (31) carried on the circuitry support (30) and passed through a window (19) in the removable bottom (17); removable fastening means (20, 21, 27, 28) for quick connection between said box (10) bottom (17) and support plate (23), the distribution of the system leads being accomplished by means of an embedded box (25).

2. An intercom apparatus according to Claim 1, characterized in that said circuitry support (30) comprises a single printed circuit board (30) of right dihedral configuration, arranged with one face thereof parallel to one side of the box (10) and the other parallel to the bottom (17).

3. An intercom apparatus according to Claims 1 and 2, characterized in that the face of the printed circuit (30) parallel to the box (10) side is provided with a connector (31) intended for cooperation with the coupling of the mating connector (26) carried on the support plate (23).

4. An intercom apparatus according to any of the preceding claims, characterized in that the face of the printed circuit (30) parallel to the removable bottom (17) is formed with a window (19) wherethrough the base of the visual monitor kinescope is passed, said base being protected by a deep-drawn housing (18) of the removable bottom (17) which protrudes inwards of said embedded box (25), it being passed through an opening (24) of the support plate (23).

5. An intercom apparatus according to any of the preceding claims, characterized in that the removable fastening means include a latch rod (21) carried on the removable bottom (17) and intended for cooperation with the slot of a lug (28) of the support plate (23), said lug (28) being passed through a corresponding opening (20) in said bottom (17).

6. An intercom apparatus according to any of the preceding claims, characterized in that said plate has a series of fins (27) intended for cooperation, for centering and retaining purposes, with corresponding seats (20) of the removable bottom (17).

**Patentansprüche**

1. Gegensprechanlage mit Bildübertragung für Wandmontage, mit einer den Sichtmonitor und eine Halterung (30) für die Schaltung enthaltenen Behälterbox (10), die durch einen einen abnehmbaren Boden (17) bildenden Deckel vervollständigt wird, der dazu bestimmt ist, bei der Halterung der Anlage mit einer Halterungsplatte (23) zusammenzuwirken, die vorher an der Wand angebracht ist; wobei Halterungsplatte (23), vorzugsweise aus Metall, fest an der Wand angebracht ist und eine Vielfachverbindung (26) trägt, die zum Zusammenwirken in gegenseitiger Verbindung mit einer ähnlichen komplementären Verbindung (31) ausgebildet ist, die auf dem Schaltungsträger (30) getragen wird und durch ein Fenster (19) in dem abnehmbaren Boden (17) hindurchgeht; sowie mit lösbaren Befestigungsmitteln (20, 21, 27, 28) zur Schnellverbindung zwischen dem Box (10)-Boden (17) und der Halterungsplatte (23), wobei die Verteilung der Systemleitungen mit Hilfe einer eingebetteten Box (25) erreicht wird.

2. Gegensprechanlage nach Anspruch 1, dadurch gekennzeichnet, daß der Schaltungsträger (30) eine einzelne gedruckte Schaltungskarte (30) mit der Form eines rechtwinkligen Dieders aufweist, die so angeordnet ist, daß ihre eine Seite parallel zu einer Seite der Box (10) und ihre andere Seite parallel zu dem Boden (17) ist.

3. Gegensprechanlage nach Anspruch 1 und 2, dadurch gekennzeichnet, daß die parallel zu der Box (10) verlaufende Fläche der gedruckten Schaltung (30) mit einem Verbinder (31) versehen ist, der zum Zusammenwirken mit der Kupplung des entsprechenden Verbinders (26) bestimmt ist, der auf der Halterungsplatte (23) getragen wird.

4. Gegensprechanlage nach einem der vorhergehenden Ansprüche, dadurch gekennzeichnet, daß die parallel zu dem abnehmbaren Boden (17) angeordnete Fläche der gedruckten Schaltung (30) mit einem Fenster (19) gebildet ist, durch das die Basis der Bildröhre des Sichtmonitors hindurchgeführt ist, wobei die Basis durch ein tiefgezogenes Gehäuse (18) des abnehmbaren Bodens (17) geschützt wird, das in die eingebettete Box (25) hineinragt, und das durch eine Öffnung (24) der Halterungsplatte (23) hindurchgeht.

5. Gegensprechanlage nach einem der vorhergehenden Ansprüche, dadurch gekennzeichnet, daß das lösbare Befestigungsmittel eine an dem abnehmbaren Boden (17) getragene Klinkenstange (21) aufweist, die zum Zusammenwirken mit dem Schlitz eines Ansatzes (28) der Halterungsplatte (23) bestimmt ist, wobei der Ansatzt (28) durch eine entsprechende Öffnung (20) in den Boden (17) hindurchgeführt ist.

6. Gegensprechanlage nach einem der vorhergehenden Ansprüche, dadurch gekennzeichnet, daß die Platte eine Reihe von Flossen (27) aufweist, die zum Zweck der Zentrierung und Halterung zum Zusammenwirken mit entsprechenden Sitzen (20) des abnehmbaren Bodens (17) bestimmt sind.

**Revendications**

1. Dispositif d'interphone mural à transmission d'images, comprenant un coffret (10) contenant le dispositif de surveillance visuelle et un support (30) pour les circuits, ledit coffret (10) étant complété par une pièce de fermeture formant un fond amovible (17) destiné à coopérer, tut en supportant le dispositif, avec une plaque-support (23) préalablement fixée au mur; ladite plaque-support (23), avantageusement en métal, étant fixée au mur et portant un connecteur multipolaire (26) conçu pour coopérer, en créant une relation de connexion mutuelle, avec un connecteur complémentaire similaire (31) porté par le support (30) de circuits et passant à travers une fenêtre (19) du fond amovible (17); des moyens de fixation amovibles (20, 21, 27, 28) pour une connexion rapide entre ledit fond (17) du coffret (10) et la plaque-support (23), la répartition des conducteurs du système étant accomplie à l'aide d'un boîtier intégre (25).

2. Dispositif d'interphone selon la revendication 1, caractérisé en ce que ledit support (30) de circuits comporte une seule carte (30) de circuit imprimé à configuration de dièdre droit, disposée avec une première face parallèle à un côté de coffret (10), et l'autre parallèle au fond (17).

3. Dispositif d'interphone selon les revendications 1 et 2, caractérisé en ce que la face du circuit imprimé (30) parallèle au côte du coffret (10) est pourvue d'un connecteur (31) destiné à coopérer avec la pièce de raccordement du connecteur en regard (26) porté par la plaque-support (23).

4. Dispositif d'interphone selon l'une quelconque des revendications précédentes, caractérisé en ce que la face du circuit imprimé (30) parallèle au fond amovible (17) est munie d'une fenêtre (19) à travers laquelle passe la base du tube récepteur de télévision du dispositif de surveillance visuelle, ladite base étant protégée par un carter embouti profond (18) du fond amovible (18) qui fait saillie vers l'intérieur dudit boîtier intégré (25), ladite base transversant une ouverture (24) de la plaque-suppport (23).

5. Dispositif d'interphone selon l'une quelconque des revendications précédentes, caractérisé en ce que les moyens de fixation amovibles comprennent une tige de verrouillage (21) portée par le fond amovible (17) et destinée à coopérer avec la fente d'une patte (28) de la plaque-support (23), ladite patte (28) traversant une ouverture correspondante (20) dudit fond (17).

6. Dispositif d'interphone selon l'une quelconque des revendications précédentes, caractérisé en ce que ladite plaque a une série d'ailettes (27) destinée à coopérer, à des fins de centrage et de retenue, avec des surfaces d'appui correspondantes (20) du fond amovible (17).

Fig. 1

EP 0 195 092 B1

Fig. 2

EP 0 195 092 B1

# Fig. 3